# EUROPEAN PATENT SPECIFICATION

(11) **EP 2 336 009 B1**
(45) Date of publication and mention of the grant of the patent: **23.01.2013**
(21) Application number: 09179691.2
(22) Date of filing: 17.12.2009
(51) Int. Cl.: B62D 51/02, B66F 9/075

(54) **Industrial truck comprising a pivotal platform with progressive suspension**
Flurförderfahrzeug, das eine Drehplattform mit progressiver Aufhängung umfasst
Camion industriel doté d'une plate-forme pivotante avec une suspension progressive

(43) Date of publication of application: 22.06.2011
(73) Proprietor: BT Products AB, 595 81 Mjölby (SE)
(72) Inventor: Andersson, Lars-Gunnar, 582 31 Linköping (SE)
(74) Representative: Börlin, Maria

(56) References cited:
- EP-A1- 2 014 605
- FR-A- 980 448
- JP-A- 2002 145 128

## Description

### TECHNICAL FIELD

The present invention relates to an industrial truck comprising a pivotal driver's platform that is pivotal from an upright position to a lowered position and further is resiliently suspended in the lowered position.

### BACKGROUND ART

Industrial trucks, for example tiller arm trucks may be provided with a driver's platform that is pivotal from an upright position to a lowered position so that the driver can ride on the truck while standing on the platform. The platform is also generally provided with suspension in order to absorb shocks that are generated when the truck is driven over bumps or on uneven ground.

JP2002145128 shows a tiller arm truck with a pivotal platform that is provided with suspension. The platform is pivoted downwards until a forward part of the platform presses against a spring biased plate. When a driver is standing on the platform the spring counteracts the weight of a driver so that the platform is held in an essential level position. When the truck encounters a bump, the spring allows the platform to swing a few degrees around its pivotal axis whereby suspension is provided for the platform. A similar pivotal platform is also showed in JP 2002128485.

A problem with the platforms described above is that they do not provide proper suspension for drivers of all weights. In the trucks described above the spring that provides suspension to the platform is normally dimensioned to suit the weight of an average driver, normally within the range of 50-70 kg. However, the suspension of the known platforms will be too weak for a driver which weighs more than average and too hard for a driver that weighs below average.

Document EP 2 304 827, cited as prior art under Art. 54(3) EPC, discloses a platform suspension comprising an adjustable air spring.

It is an object of the present invention to provide an improved industrial truck with a pivotal platform which provides proper suspension to drivers of all weights.

### SUMMARY OF THE INVENTION

According to the invention this object is achieved by an industrial truck comprising a pivotal driver's platform that is pivotal from an upright position to a lowered position and further is resiliently suspended in the lowered position, characterized in that the suspension of the platform comprises progressive spring means, wherein the progressive spring means comprises at least one progressive helical spring; or at least one progressive cup spring; or at least one progressive wave spring.

The use of progressive springs in the suspension of the platform provides an advantage when drivers of different weight are using the truck since the driver, regardless of weight, will experience the same suspension of the platform. A further advantage is that the suspension of the platform remains essentially the same regardless if the truck is driven on a smooth surface or on a surface which is uneven.

According to an alternative, the progressive spring means comprises one or more progressive springs in which the distance between the coils in both ends of the spring is narrower than the distance between the coils in the centre of the spring.

According to one alternative, the progressive spring means comprises several springs of different spring rates and/or lengths. The suspension of the truck is thereby easily optimized for drivers of different weight or to different ground conditions.

According to one embodiment, the platform is pivotally attached to a frame which is firmly attached to the truck, wherein the truck comprises a supporting element which is resiliently arranged in the frame by said progressive spring means, wherein a forward portion of the platform abuts against the supporting element when the platform is in the lowered position. A pivotal, resiliently suspended platform for drivers of different weight is thereby achieved in a simple manner.

According to a second embodiment, the truck comprises a supporting element to which the platform is pivotally attached, a means for blocking the platform in a predetermined lowered position from further downwards directed pivoting, wherein the supporting element is resiliently movable in vertical direction. The advantage thereof is that a resiliently suspended platform for the driver is provided whereby it is ensured that the angular position of the platform can be blocked in an ergonomically correct position. The risk that the driver of the truck is injured due to incorrect working position is thereby minimized. A further advantage is that the predetermined angular position of the platform does not change over time due to wear.

According to one alternative, the platform comprises attachment elements for pivotally attaching the platform to the supporting element wherein the supporting element comprises at least one mechanical stop, which is arranged to block the attachment elements in a predetermined position. The arrangement provides for stable and secure blocking of the platform in the predetermined lowered position.

According to one alternative, the platform comprises attachment elements for pivotally attaching the platform to the supporting element, wherein the attachment elements comprises a mechanical stop for blocking the platform in a lowered position by interaction with the supporting element. Since the mechanical stop is located on the fastening elements of the platform the size of the supporting element is reduced and therefore occupies less space in the truck.

Preferably, the supporting element is resiliently supported by the progressive spring means.

Preferable, the progressive spring means for supporting the supporting element are arranged on a frame which is attached to the truck.

Spring holding means for holding the progressive spring means may be arranged on the frame.

The supporting element may comprise at least one space for accommodating the progressive spring means. A very compact arrangement of the parts in the platform may thereby be achieved.

The movement of the supporting element may be guided in the vertical direction by guide elements. The guide elements ensure that the supporting element only moves in the vertical direction when a driver is present on the platform of the truck.

### BRIEF DESCRIPTION OF THE DRAWINGS

Figure 1 shows schematically a side view of an industrial truck comprising a pivotal driver's platform according to the invention.
Figure 2 is an exploded view showing the parts of the platform according to a first embodiment of the invention.
Figure 3a is a perspective view of the supporting element according to a first embodiment of the invention.
Figure 3b is a side view of the supporting element according to the first embodiment of the invention.
Figure 3c is a side view of the supporting element according to the first embodiment of the invention comprising an alternative mechanical stop.
Figure 4 shows an alternative where several springs of different length and/or spring rate supports are arranged to support the platform.
Figure 5 is an exploded detailed view, showing the frame, the supporting element, the spring means and the guide rods of the first embodiment of the invention
Figure 6 shows the assembled platform according to the first embodiment of the invention in a lowered, horizontal position.
Figure 7a and 7b shows schematically two alternative operating elements for pivoting the platform of the first embodiment of the invention.
Figure 8 shows schematically the platform according to the first embodiment of the invention in a raised, vertical position.
Figure 9 shows schematically the platform according to the first embodiment of the invention in a lowered, horizontal position with the weight of a driver acting on the platform.
Figure 10 shows an assembled platform according to a second embodiment of the invention

### DETAILED DESCRIPTION

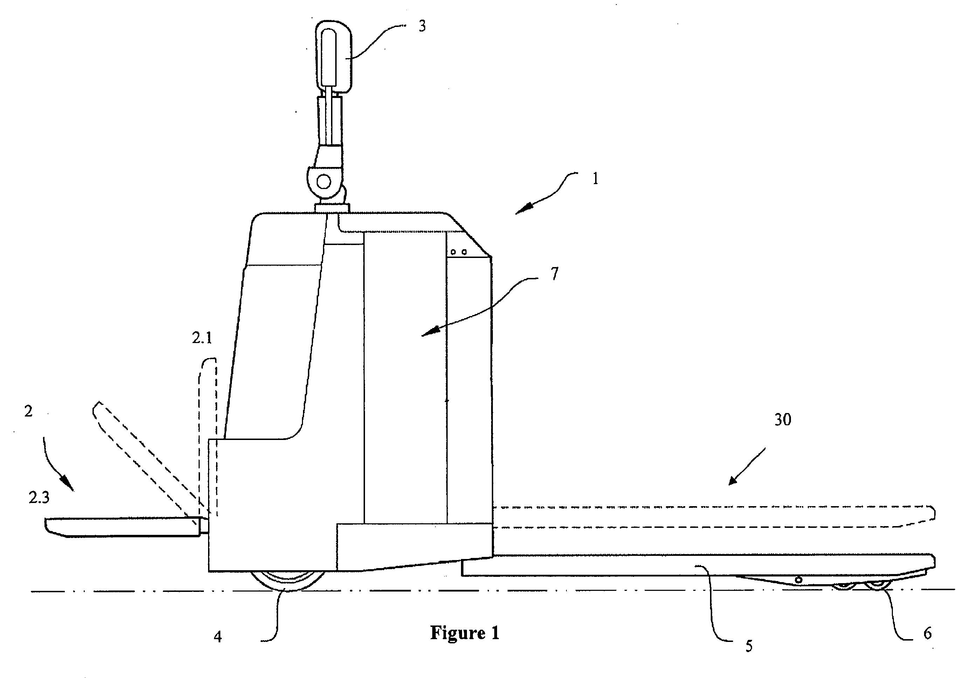

Figure 1 illustrates schematically an industrial truck according to the invention with a pivotal platform for the driver. The truck illustrated in figure 1 is a so called tiller arm truck. This truck type, also known as stacker or order pick truck, is generally known in the art and its features will therefore only be briefly described. The truck comprises a housing 7 in which the motor, the hydraulics and the control system of the truck are located (these parts are not shown in figure 1). The truck comprises a drive wheel 4 which is propelled by the motor, forward support wheels 6 that are arranged on support arms 5 and a load engaging means 30 that can be raised and lowered. The truck 1 further comprises a platform 2 which is pivotal between an upright position 2.1 and a lowered, horizontal position 2.3. A steering means 3 e.g. a tiller arm is arranged such that the driver can steer the truck while walking behind the truck or while standing on the platform when the platform is pivoted into a lowered position. Although a tiller arm truck is described in figure 1, it is obvious that the invention also is applicable to other truck types with driver's platforms that are pivotal between an upright position and a lowered position.

Above and in the following is by "horizontal position" meant that the platform is parallel to the ground, when the truck is positioned on even ground. By upright position" is meant that the platform is essential parallel to the motor housing of the truck.

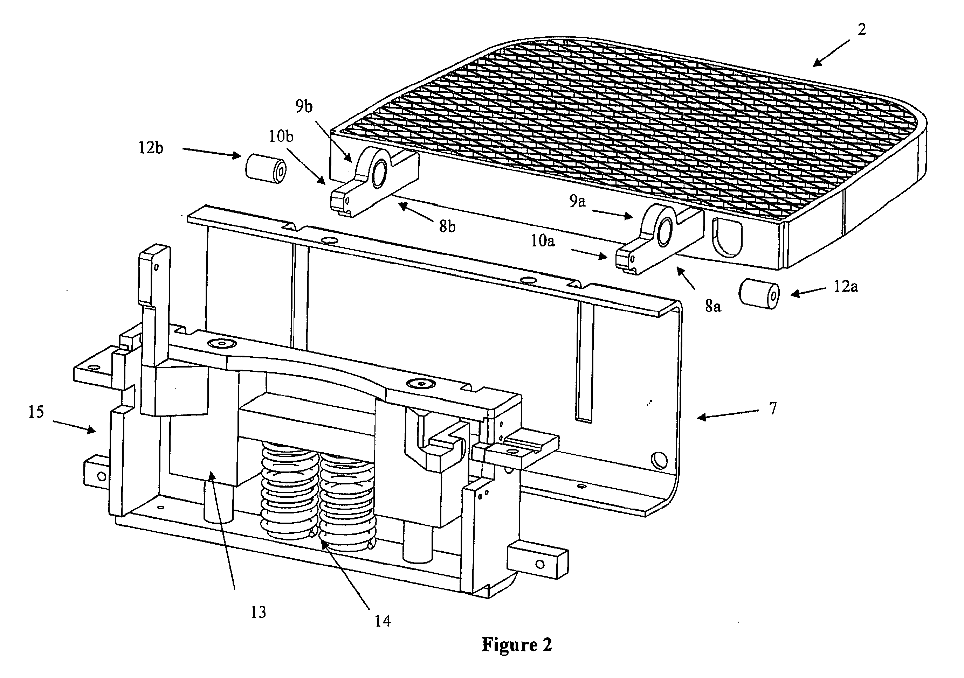

Figure 2 shows the principal parts of the truck which relates to the pivotal platform according to a first embodiment of the invention. These parts are: a platform 2 for the driver, a supporting element 13 in which the platform is pivotally attached, spring means 14 for providing suspension to the supporting element 13 and a frame 15 that is fixed to the truck and in which the spring means 14 and the supporting element 13 are supported. Figure 2 also shows a portion of the motor housing 7 of the truck.

Following is a detailed description of the principal parts that relates to the pivotal platform.

### The platform

The platform 2 (see figure 2) has a generally flat surface onto which a driver may stand while driving the truck. The platform is manufactured from a suitable construction material e.g. steel or fibre reinforced plastics and is dimensioned to withstand the weight of a driver.

The platform 2 comprises two attachment elements 8a and 8b which protrudes from the front edge of the platform. Each attachment element 8a and 8b comprises a ring-shaped opening 9a, 9b for receiving a bearing shaft 12a, 12b by which the platform is pivotally attached to the supporting element 13. Half of the ring-shaped opening is located in the attachment element and the other half of the ring-shaped opening is delimited by a protruding, semicircle-shaped portion of the attachment element. Each attachment element 8a, 8b further comprises a protruding portion 10a and 10b for interacting with a mechanical stop in the supporting element 13 in order to block the platform in a predetermined lowered position. The protruding portions 10a, 10b extend from the ring-shaped opening in a direction away from the platform 2.

The length of the attachment elements 8a, 8b and the protruding portion 10a, 10b as well as the position of the ring-shaped opening 9a, 9b on the attachment element depends on the construction of the truck and the design of the supporting element. For example, the openings 9a and 9b may also be holes through the centre of the attachment elements 8a and 8b.

### The supporting element

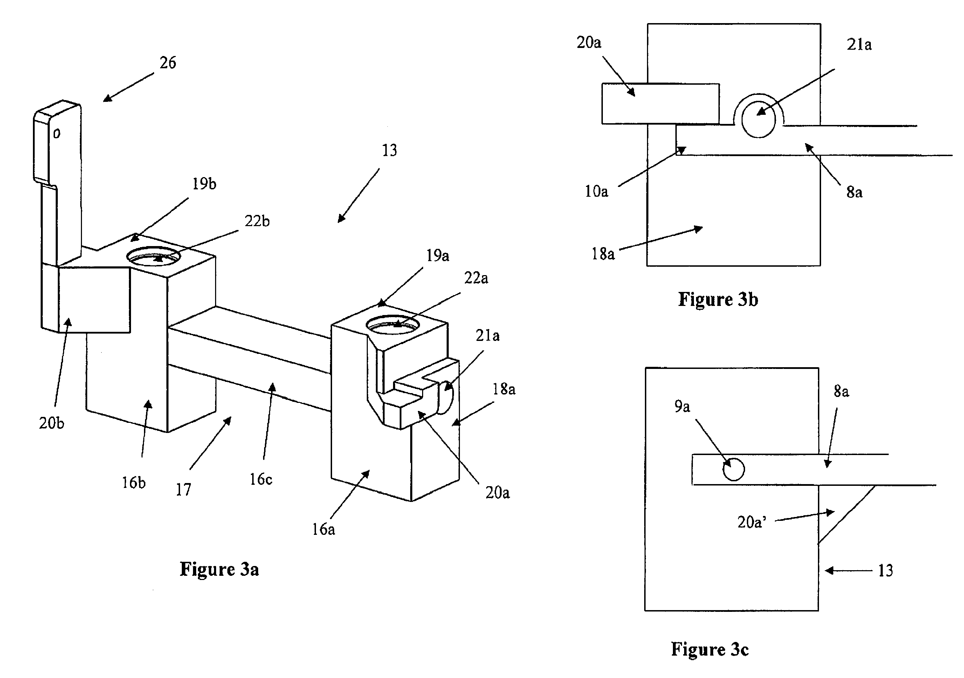

Figure 3a shows a perspective view of the supporting element 13 in detail. The supporting element is of H-shape and comprises two legs 16a, 16b of essential rectangular cross-section. The legs are interconnected by a yoke 16c which also is of rectangular cross-section. The legs 16a and 16b of the supporting element each comprises a top surface 19a, 19b and side surfaces 18a, 18b. Figure 3 shows side surface 18a on leg 16a, an identical side surface 18b is provided on leg 16b. It is obvious that the legs and the yoke may be of other cross-section than rectangular, for example circular or oval.

Each of the side surfaces comprises a boring to which the platform 2 can be attached by the bearing shafts. In figure 3 a boring 21 a is shown on side surface 18a, however an identical boring is also comprised in other side surface. The supporting element 13 may comprise one or several spaces, located on the underside of the supporting element for accommodating spring means. The supporting element 13 in figure 3a comprises one space 17 for accommodating a spring means. The spaces are of a shape suitable for accommodating a spring means, for example rectangular or cylindrical shape.

A mechanical stop for blocking the platform in a predetermined, preferably horizontal, position is provided on each side surface of the supporting element. Figure 3a shows a mechanical stop 20a on the side surface 18a. A mechanical stop 20b is also provided on the other side surface. The mechanical stop 20b is partly shown in figure 3a. The mechanical stops protrude a distance from the side surfaces. The distance is dimensioned so that the mechanical stop blocks the attachment elements 8a, 8b of the platform 2. The mechanical stop may for example be a rectangular block which is attached to the side surfaces by welding or by screws. The mechanical stop may also be an integral part of the supporting element. The mechanical stop could also have other forms than a rectangular block, for example could one or several pins be arranged to protrude from the side surfaces 18a, 18b of the supporting element 13 in order to block the platform in a predetermined position.

Figure 3b shows the position of the mechanical stop 20a, which has the form of a rectangular block, on the side surface 18a of the supporting element 13.

As can be seen in figure 3b the mechanical stop 20a is, with respect to the platform 2, arranged on the opposite side of the boring 21 a. The underside of the mechanical stop is level with the centre of the boring 21 a and its thickness dimensions matches the thickness of the protruding portions 10a of the attachment elements 8a of the platform 2.

Figure 3c shows an alternative solution in which the mechanical stop 20a' is wedge shaped, i.e. triangular and is arranged on the attachment 8a of the platform 2. The thickness of the mechanical stop is dimensioned so that it contacts the front side of the supporting element 13 when the platform is lowered thereby blocking the platform in the lowered position. Figure 3c further shows an opening 9a through the centre of the protruding element 8a.

The supporting element 13 may further comprise through going holes 22a and 22b in which guide rods may be inserted. The through going holes 22a and 22b extends from the top surface 19a, 19b of each leg 16a and 16b of the supporting element 13 to the undersides of respective leg 16a, 16b.

The supporting element 13 may also comprise an arm 26 to which an operating element may be attached for pivoting the platform. The arm 26 extends in the vertical direction.

Depending on the design of the truck, the supporting element 13 may be of other shape than H-shape. For example, the supporting element may be a block of rectangular shape or rounded shape, e.g. cylindrical or oval.

### The spring means

Progressive spring means 14 are provided for resiliently supporting the platform 2, see figure 2 which schematically shows a progressive spring means 14. In a progressive spring, the stiffness of the spring varies with the force that is applied to the spring. Thus, the spring has a low stiffness when a small force is applied to the spring and a high stiffness when a large force is applied to the spring.

The progressive spring means is preferably helical and may be of various configurations. According to one alternative, the distance between the coils of the spring varies. According to another alternative, the dimension of the spring wire varies throughout the length of the spring. According to a further alternative, the diameter of the spring coils varies so that the spring obtains a conical shape.

According to a preferred embodiment, the distance between the coils in both ends of the spring is narrower than the distance between the coils in the centre of the spring.

In uncompressed condition, this spring has a first low spring rate. When a small load is applied to the spring, all the coils are first equally compressed according to the spring rate of the spring. An adequate suspension for the small load is therefore provided. If the load is increased, the coils at the ends of the spring come into contact with each other and become inactive. At this point only the coils in the centre of the spring are active during compression. The spring therefore has a higher spring rate due to the greater distance between these coils. The spring thus also provides adequate suspension for the increased load.

It is obvious that the spring means also may be other types of progressive springs than helical. For example a progressive cup spring or a progressive wave spring. The spring means may comprises one, two or more springs that are arranged to support the supporting element 13. The spring means 14 are dimensioned, e.g. the length and the force of the spring means, such that adequate suspension is provided when a driver is standing on the platform.

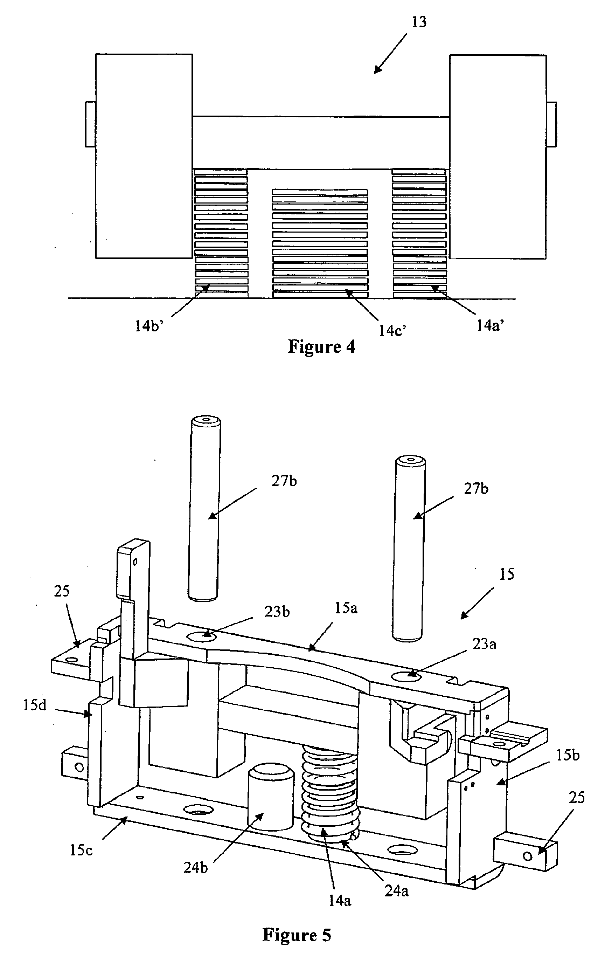

The spring means may also comprise several springs which have different spring rates and/or lengths. For example, as shown in figure 4, three springs may be arranged next to each other. The spring 14c' in the centre is shorter and may have a spring rate that is different than the spring rate of the springs 14a' and 14b'. When a light weight driver is present on the platform, only springs 14a' and 14b' are compressed whereby a suitable suspension for the lightweight driver is provided. When a heavy driver is present on the platform, also spring 14c' is compressed whereby a stronger suspension is provided.

### The frame

A frame 15 is provided in which the supporting element 13 and the spring means 14 are arranged. Figure 5 shows a detailed view of the frame. The frame 15 has a generally rectangular shape and consists of two flat horizontal beams 15a, 15c and two flat vertical beams 15b and 15d that are welded or riveted together. The frame may also be cast in one piece. The frame 15 comprises fastening means 25, e.g. openings by which the frame can be firmly attached to the motor housing of the truck, e.g. by bolts.

The upper and lower horizontal beams 15a, 15c comprise openings 23a, 23b through which guide rods 27a, 27b may be inserted.

The frame 15 further comprises holding means 24 for the spring means 14. The spring holding means may for example be cylinders that are arranged on the lower horizontal beam 15d whereby the spring means are slid over the cylinders. Figure 5 shows two spring holding means 24a and 24b. A spring 14a is slid over spring holding means 24a. The other spring (spring 14b) has been omitted to show the shape and location of the spring holding means 24b.

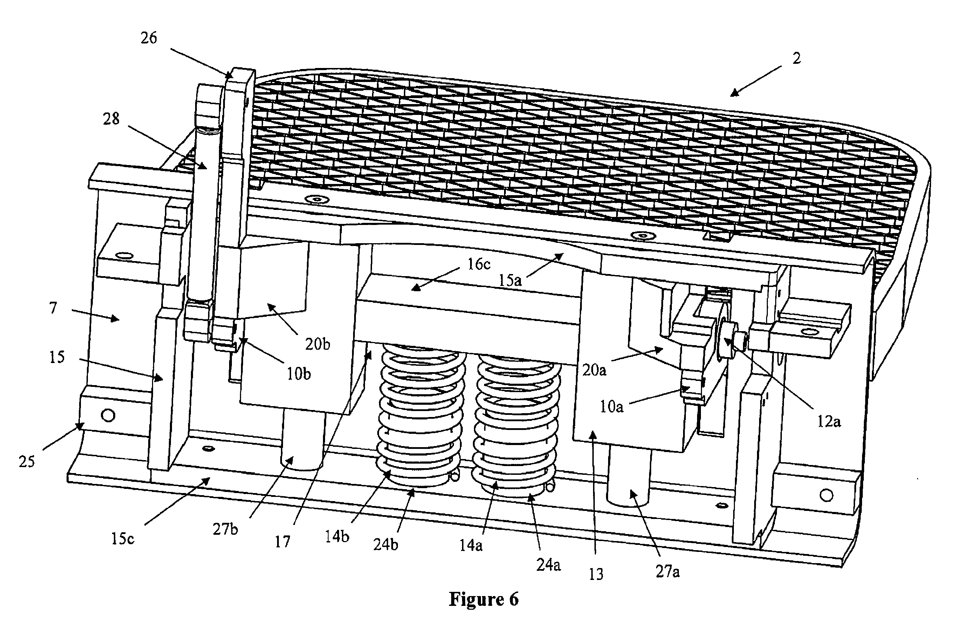

An operating element may be provided to pivot the platform. According to one alternative, see figure 6, the operating element is a gas spring 28. The upper end of the gas spring is pivotally attached to the arm 26 on the supporting element 13. The lower end of the gas spring 28 is pivotally attached to the protruding portion 10b of the platform 2. In figure 6 the platform is in a lowered position, i.e. a force is acting on the platform. In this position the gas spring is compressed by the force acting on the platform. When the force is removed, the gas spring 28 expands and presses the protruding portion 10b of the platform 2 downwards. The platform then swing around the bearing shafts into the upright position.

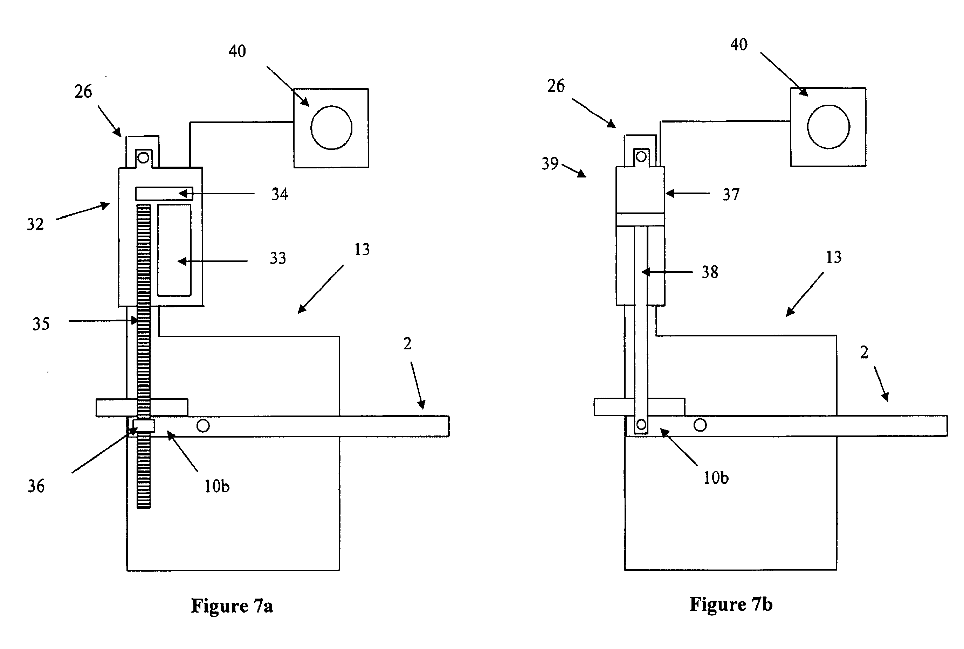

According to a second alternative, see figure 7a, the operating element is an electrical ball screw linear actuator 32. The ball screw linear actuator 32 comprises an electrical motor 33, a gear unit 34, a threaded shaft 35 and a ball bearing 36 that is arranged on the threaded shaft. The gear unit 34 is arranged to transfer the rotational movement from the motor to the threaded shaft 35. The upper end of the ball screw linear actuator is pivotally attached to the supporting arm 13. The ball bearing 36 is pivotally attached to the protruding portion 10b of the platform 2. The electrical motor 33 is connected by wires to a control 40 on the truck, e.g. one or two buttons or a control stick. By actuating the control 40 the driver of the truck may control the motor 33 to rotate the threaded shaft 35 clockwise or counter clockwise. The ball bearing 36 then runs upwards or downwards on the threaded shaft, whereby the platform is lowered or raised.

According to a further alternative, see figure 7b, the operating element is a hydraulic linear actuator 36. The hydraulic linear actuator 39 comprises a hydraulic cylinder 37 and a hydraulic piston 38. The upper end of the hydraulic cylinder 37 is attached to the supporting arm 13 and the lower end of the hydraulic piston 38 is pivotally attached to the protruding portion 10b of the platform 2. The hydraulic piston is connected to the hydraulic system of the truck (not shown). A control 40, e.g. one or two buttons or a control stick, is connected to the hydraulic system so that the movement of the piston can be controlled. By actuating the control 40, the driver can control the hydraulic cylinder to move the piston downwards or upwards whereby the platform is lowered or raised.

The assembled pivotal platform will be described in the following with reference to figure 6. As can be seen in figure 6, the frame 15 is firmly fastened to the inner side of the motor housing 7 of the truck by bolts through the openings 25 in the frame.

On the lower horizontal beam 15c of the frame are two progressive springs 14a, 14b, e.g. helical springs arranged. These progressive springs are shown schematically in figure 6. The springs 14a, 14b are slid over cylinders 24a, 24b that protrudes from the lower horizontal beam 15c. The springs are thereby securely held on the beam 15c.

The supporting element 13 is arranged in the frame 15 so that the springs 14a, 14b extend into the space 17 of the supporting element 13 and so that that the springs are in contact with the underside of the yoke 16c of the supporting element 13. The supporting element is thereby resiliently supported by the springs 14 so that the supporting element 13 in unloaded state, i.e. when no driver is present on the platform, is lifted by the springs 14a, 14b and is pressed against the upper horizontal beam 15a of the frame 15.

Two guide rods 27a, 27b are inserted through the holes in the supporting element. The guide rods 27a and 27b are fixed in the openings in the upper and lower beams 15a, 15c of the frame 15. The supporting element 13 may slide vertically upwards and downwards on the guide rods 27a, 27b but is prevented from moving in lateral direction.

The platform 2 is attached to the supporting element 13 by bearing shafts which are inserted through the ring-shaped openings of the attachment elements of the platform into the borings in the supporting element 13. In figure 6 is shown a bearing shaft 12a that is inserted through the ring-shaped opening in the attachment elements of the platform into the boring of the supporting element 13. An identical bearing shaft is inserted through the ring-shaped opening of the other attachment element of the platform into the other boring of the supporting element.

The bearing shafts permit the platform to pivot, i.e. to swing from an upright vertical position to a lowered predetermined, preferably horizontal, position. As can be seen in figure 6, the platform is lowered into a horizontal position, in which the protruding portions 10a, 10b of the attachment elements of the platform 2 are in contact with the mechanical stops 20a and 20b of the supporting element 13 so that the platform 2 is blocked from further downwards directed pivoting.

Figure 6 also shows a gas spring 28 is for pivoting the platform to an upright position. The upper end of the gas spring is pivotally attached to the arm 26 on the supporting element 13. The lower end of the gas spring 28 is pivotally attached to the protruding portion 10b of the platform 2. Instead of the gas spring 28 may as described other types of linear actuators be provided, for example an electric ball screw linear actuator or a hydraulic linear actuator.

In the following is the function of the platform described.

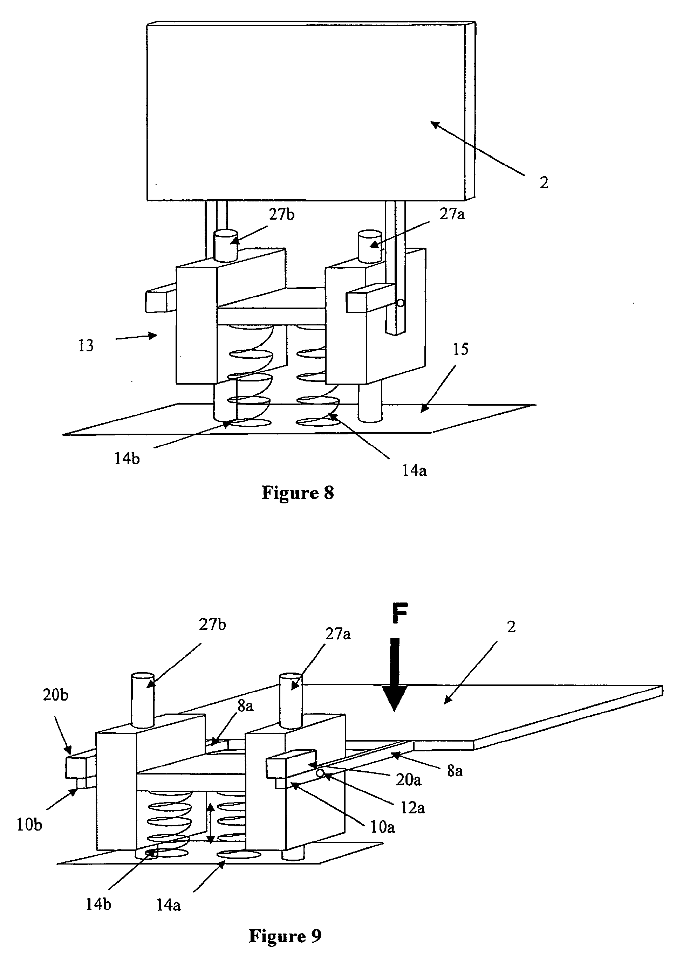

Figure 8 shows schematically the platform in an upright position. The platform 2 may be pivoted manually into the upright position or by the force of the gas spring. Alternatively, the platform is raised by the electric or hydraulic linear actuator. When the platform is in the upright position, the springs 14a, 14b, which are arranged on the frame 15, lifts the supporting element 13.

Figure 9 shows the platform pivoted into a lowered horizontal position with the force F acting on the platform. The force F corresponds to the weight of the driver.

The platform is lowered into the horizontal position in that the driver manually swings the platform downwards. Alternatively, the platform is lowered by the linear actuator. The platform thereby pivots around the bearing shafts by which the platform is attached to the supporting element 13. Figure 9 shows the attachment element 8a which is attached to the supporting element 13 by a bearing shaft 12a, however as described above the other attachment elements 8b of the platform is also attached to the supporting element 13 by an identical bearing shaft. The platform pivots downwards until the protruding portions 10a and 10b of the attachment elements 8a and 8b of the platform comes into contact with the undersides of the mechanical stops 20a and 20b of the supporting element 13. The mechanical stops then blocks the protruding portions 10a and 10b of the platform so that the platform is blocked in the horizontal position from further pivoting.

When the driver is present on the platform, the weight F of the driver puts a momentum on the platform. However, the platform is prevented from further pivoting by the mechanical stops 20a and 20b.

The weight of the driver forces the supporting element 13 to slide downwards on the guide rods 27a, 27b against the force of the springs 14a, 14b which are compressed. The guide rods 27a, 27b prevents the supporting element 13 from moving in other directions than the vertical direction. If the truck runs over a bump, the movement of the platform is absorbed by the spring means.

When the driver leaves the platform, the supporting element 13 is lifted by the springs 14a, 14b towards the upper horizontal beam of the frame. The platform may then be pivoted into the upright position.

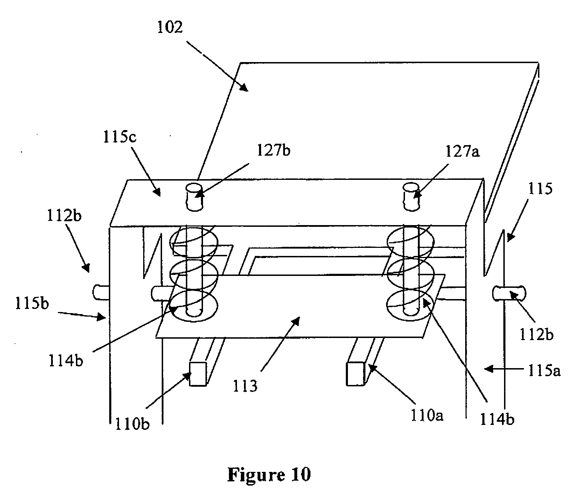

Figure 10 shows a pivotal platform of an industrial truck according to a second embodiment of the invention. The principal parts relating to the platform according to this embodiment of the invention are: a platform 102 for the driver of the truck, a supporting element 113 for resiliently resting the platform in the lowered position, progressive spring means 114 for providing suspension to the supporting element and a frame 115.

The frame 115 is firmly attached to the motor housing (not shown) of the truck and comprises three flat beams 115a, 115b and 115c which are attached to each other. As can be seen in figure 10 beams 115a and 115b are arranged parallel to each other with their longitudinal short sides facing upwards. The flat side of beam 115c is attached to the longitudinal short sides of beams 115a and 115b.

The supporting element 113 has a flat shape, i.e. is a flat element and extends between the parallel beams 115a and 115b. The supporting element 113 hangs from beam 115c in rods 127a and 127b. The upper ends of the rods are firmly attached to beam 115c e.g. by screws. The other end of each rod extends through a hole in the supporting element and on the end of the rod is a nut (not shown) firmly attached. When no force is acting on the supporting element 113, the supporting element rests on the nuts. If an upwards directed force is applied on the underside of the supporting element it slides on rods 127a and 127b in a direction towards the beam 115c.

Progressive springs 114a and 114b are arranged between the supporting element and the beam 115c. The progressive spring means are shown schematically in figure 10. The progressive springs may be of any type that has been described above under the first embodiment of the truck. However, in figure 10 the progressive springs 114a, 114b are progressive helical springs and are slid over the rods 127a and 127b so that the springs are fixed in position. As described in connection with the first embodiment of the invention any number of springs may be arranged between the frame 115c and the supporting element 113.

The platform 102 is essentially identical with the platform that is described above under the first embodiment of the industrial truck. The platform comprises a surface for the driver and two attachment elements 108a and 108b which comprise openings 109a and 109b (not visible in figure 9) by which the platform is pivotally attached to beams 115a and 115b by bearing shafts 112a and 112b. The attachment elements 108a and 108b further comprises a protruding portion 110a and 110b for interaction with the supporting element 113. The protruding portion extends from the opening in the fastening means in a direction away from the platform.

In operation, the platform 102 is lowered by the driver and pivots thereby around the bearing shafts 112a and 112b until the protruding parts 110a and 110b of the fastening elements of the platform abut against the underside of the supporting element 113. When the driver enters the platform the weight of the driver puts a momentum on the platform whereby the protruding portions 110a and 110b presses the supporting element 113 towards beam 115c against the force of the progressive spring means 114a and 114b. If the truck runs over an unevenness, such as a bump, the shock is absorbed by the springs.

Although particular embodiments have been disclosed herein in detail, this has been done for purposes of illustration only, and is not intended to be limiting. Features of the disclosed embodiments may be combined. In particular, it is contemplated by the inventor that various substitutions, alterations, and modifications may be made to the invention within the scope of the appended claims.

## Claims

1. An industrial truck (1) comprising a pivotal driver's platform (2, 102) that is pivotal from an upright position to a lowere position and further is resiliently suspended in the lowered position **characterized in that**, the suspension of the platform (2, 102) comprises progressive spring means (14, 114), wherein the progressive spring means (14, 114) comprises at least one progressive helical spring; or at least one progressive cup spring; or at least one progressive wave spring.

2. The industrial truck (1) according to claim 1, wherein the progressive spring means (14, 114) comprises one or more progressive helical springs in which the distance between the coils in both ends of the spring is narrower than the distance between the coils in the centre of the spring.

3. The industrial truck (1) according to any of the preceding claims, wherein the progressive spring means (14, 114) comprises several springs (14a', 14b', 114a', 114b') of different spring rate and/or lengths.

4. The industrial truck (1) according to any of the preceding claims, wherein the platform (102) is pivotally attached to a frame (115) which is firmly attached to the truck, wherein the truck comprises a supporting element (113) which is resiliently arranged in the frame (115) by said progressive spring means (114), wherein a forward part of the platform abut against the supporting element (113) when the platform (102) is in the lowered position.

5. The industrial truck (1) according to any of claims 1-3, wherein the truck comprises a supporting element (13) to which the platform (2) is pivotally attached, a means (20a, 20b, 20a', 20b') for blocking the platform (2) in a predetermined lowered position from further downwards directed pivoting, wherein the supporting element (13) is resiliently movable in vertical direction.

6. The industrial truck according to claim 5, wherein the platform (2) comprises attachment elements (8a, 8b) for pivotally attaching the platform to the supporting element (13), wherein the supporting element (13) comprises at least one mechanical stop (20a, 20b), which is arranged to block the attachment elements (8a, 8b) in a predetermined position.

7. The industrial truck according to claim 5, wherein the platform comprises attachment elements (8a, 8b) for pivotally attaching the platform to the supporting element (13), wherein the attachment elements (8) comprises a mechanical stop (20a', 20b') for blocking the platform in a lowered position by interaction with the supporting element (13).

8. The industrial truck according to any of claims 5 - 6, wherein the supporting element (13) is resiliently supported by the progressive spring means (14).

9. The industrial truck according to claim 8, wherein the progressive spring means (14) for supporting the supporting element (13) are arranged on a frame (15) which is attached to the truck.

10. The industrial truck according to claim 9, wherein spring holding means (24) for holding the progressive spring means (14) are arranged on the frame (15).

11. The industrial truck (1) according to any of claims 5 -10, wherein the supporting element (13) comprises at least one space (17) for accommodating the progressive spring means (14).

12. The industrial truck (1) according to any of claims 5 - 11, wherein the movement of the supporting element (13) is guided in the vertical direction by guide elements (27a, 27b).

## Patentansprüche

1. Flurförderer (1), der eine schwenkbare Fahrerplattform (2, 102) aufweist, die von einer aufrechten Position zu einer abgesenkten Position verschwenkbar ist, und ferner federnd in der abgesenkten Position aufgehängt ist, **dadurch gekennzeichnet dass** die Aufhängung der Plattform (2, 102) progressive Federmittel (14, 114) aufweist, wobei die progressiven Federmittel (14, 114) mindestens eine progressive Schraubenfeder; oder mindestens eine progressive Tellerfeder; oder mindestens eine progressive Wellfeder aufweisen.

2. Flurförderer (1) nach Anspruch 1, wobei die progressiven Federmittel (14, 114) eine oder mehrere progressive Schraubenfedern aufweisen, bei denen der Abstand zwischen den Wicklungen bei beiden Enden der Feder schmaler ist als der Abstand zwischen den Wicklungen im Zentrum der Feder.

3. Flurförderer (1) nach einem der vorstehenden Ansprüche, wobei die progressiven Federmittel (14, 114) mehrere Federn (14a', 14b', 114a', 114b') unterschiedlicher Federraten und/oder Längen aufweisen.

4. Flurförderer (1) nach einem der vorstehenden Ansprüche, wobei die Plattform (102) schwenkbar an einem Rahmen (115) befestigt ist, der fest an dem Förderer befestigt ist, wobei der Förderer ein Stützelement (113) aufweist, das durch die progressiven Federmittel (114) federnd an dem Rahmen (115) angeordnet ist, wobei ein Vorderteil der Plattform an das Stützelement (113) stößt, wenn die Plattform (102) sich in der abgesenkten Position befindet.

5. Flurförderer (1) nach einem der Ansprüche 1-3, wobei der Förderer ein Stützelement (13), an dem die Plattform (2) schwenkbar befestigt ist, und ein Mittel (20a, 20b, 20a', 20b') zum in einer vorgegebenen abgesenkten Position Blockieren der Plattform (2) gegen weiteres abwärts gerichtetes Verschwenken aufweist, wobei das Stützelement (13) in vertikaler Richtung federnd bewegbar ist.

6. Flurförderer nach Anspruch 5, wobei die Plattform (2) Befestigungselemente (8a, 8b) zum schwenkbaren Befestigen der Plattform an dem Stützelement (13) aufweist, wobei das Stützelement (13) mindestens einen mechanischen Stopper (20a, 20b) aufweist, der zum Blockieren der Befestigungselemente (8a, 8b) in einer vorgegebenen Position ausgebildet ist.

7. Flurförderer nach Anspruch 5, wobei die Plattform Befestigungselemente (8a, 8b) zum verschwenkbaren Befestigen der Plattform an dem Stützelement (13) aufweist, wobei die Befestigungselemente (8) einen mechanischen Stopper (20 a' , 20 b') zum in einer abgesenkten Position Blockieren der Plattform durch Interaktion mit dem Stützelement (13) aufweisen.

8. Flurförderer nach einem der Ansprüche 5-6, wobei das Stützelement (13) durch die progressiven Federmittel (14) federnd gestützt wird.

9. Flurförderer nach Anspruch 8, wobei die progressiven Federmittel (14) zum Stützen des Stützmittels (13) auf einem Rahmen (15) angeordnet sind, der an dem Förderer befestigt ist.

10. Flurförderer nach Anspruch 9, wobei Federhaltemittel (24) zum Halten der progressiven Federmittel (14) an dem Rahmen (15) angeordnet sind.

11. Flurförderer (1) nach einem der Ansprüche 5-10, wobei das Stützelement (13) mindestens einen Raum (17) zur Aufnahme der progressiven Federmittel (14) aufweist.

12. Flurförderer (1) nach einem der Ansprüche 5-11, wobei die Bewegung des Stützelements (13) in der vertikalen Richtung durch Führelemente (27a, 27b) geführt wird.

## Revendications

1. Chariot de manutention (1) comprenant une plateforme conducteur pivotante (2, 102) qui est pivotante à partir d'une position droite vers une position abaissée et qui est en outre suspendue de manière élastique dans la position abaissée, **caractérisé en ce que** la suspension de la plateforme (2, 102) comprend des moyens de ressorts progressifs (14, 114), dans lequel les moyens de ressorts progressifs (14, 114) comprennent au moins un ressort hélicoïdal progressif ; ou au moins un ressort à rondelle progressif ; ou au moins un ressort ondulé progressif.

2. Chariot de manutention (1) selon la revendication 1, dans lequel les moyens de ressorts progressifs (14, 114) comprennent un ou plusieurs ressorts hélicoïdaux progressifs dans lesquels la distance entre les spires aux deux extrémités du ressort est plus étroite que la distance entre les spires au centre du ressort.

3. Chariot de manutention (1) selon l'une quelconque des revendications précédentes, dans lequel les moyens de ressorts progressifs (14, 114) comprennent plusieurs ressorts (14a', 14b', 114a', 114b') qui présentent des constantes de rappel et/ou des longueurs différentes.

4. Chariot de manutention (1) selon l'une quelconque des revendications précédentes, dans lequel la plateforme (102) est fixée de manière pivotante à un bâti (115) qui est fermement fixé au chariot, dans lequel le chariot comprend un élément de support (113) agencé de manière élastique dans le bâti (115) par lesdits moyens de ressorts progressifs (114), dans lequel une partie avant de la plateforme vient en butée contre l'élément de support (113) lorsque la plateforme (102) se trouve dans la position abaissée.

5. Chariot de manutention (1) selon l'une quelconque des revendications 1 à 3, dans lequel le chariot comprend un élément de support (13) auquel la plateforme (2) est fixée de manière pivotante, des moyens (20a, 20b, 20a', 20b') destinés à bloquer la plateforme (2) dans une position abaissée prédéterminée afin d'empêcher une poursuite du pivotement dirigé vers le bas, dans lequel l'élément de support (13) est mobile de manière élastique dans la direction verticale.

6. Chariot de manutention selon la revendication 5, dans lequel la plateforme (2) comprend des éléments de fixation (8a, 8b) destinés à fixer de manière pivotante la plateforme à l'élément de support (13), dans lequel l'élément de support (13) comprend au moins un arrêt mécanique (20a, 20b) agencé de façon à bloquer les éléments de fixation (8a, 8b) dans une position prédéterminée.

7. Chariot de manutention selon la revendication 5, dans lequel la plateforme comprend des éléments de fixation (8a, 8b) destinés à fixer de manière pivotante la plateforme à l'élément de support (13), dans lequel les éléments de fixation (8) comprennent un arrêt mécanique (20a', 20b') destiné à bloquer la plateforme dans une position abaissée grâce à une interaction avec l'élément de support (13).

8. Chariot de manutention selon l'une quelconque des revendications 5 à 6, dans lequel l'élément de support (13) est supporté de manière élastique par les moyens de ressorts progressifs (14).

9. Chariot de manutention selon la revendication 8, dans lequel les moyens de ressorts progressifs (14) destinés à supporter l'élément de support (13) sont agencés sur un bâti (15) qui est fixé au chariot.

10. Chariot de manutention selon la revendication 9, dans lequel des moyens de maintien de ressorts (24) destinés à maintenir les moyens de ressorts progressifs (14) sont agencés sur le bâti (15).

11. Chariot de manutention (1) selon l'une quelconque des revendications 5 à 10, dans lequel l'élément de support (13) comprend au moins un espace (17) destiné à recevoir les moyens de ressorts progressifs (14).

12. Chariot de manutention (1) selon l'une quelconque des revendications 5 à 11, dans lequel le déplacement de l'élément de support (13) est guidé dans la direction verticale par des éléments de guidage (27a, 27b).
